Europäisches Patentamt

European Patent Office

Office européen des brevets

(19)

(11) **EP 1 308 866 A1**

(12) **EUROPEAN PATENT APPLICATION**

(43) Date of publication:
07.05.2003 Bulletin 2003/19

(51) Int Cl.7: **G06F 17/60**

(21) Application number: **02021735.2**

(22) Date of filing: **25.09.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **05.11.2001 JP 2001339637**

(71) Applicant: **Hitachi, Ltd.**
**Chiyoda-ku, Tokyo 101-8010 (JP)**

(72) Inventors:
• **Yokota, Takeshi**
**Hitachi-shi, Ibaraki 316-0001 (JP)**
• **Takahashi, Nobuaki**
**Kawasaki-shi, Kanagawa 214-0001 (JP)**

(74) Representative: **Beetz & Partner Patentanwälte**
**Steinsdorfstrasse 10**
**80538 München (DE)**

(54) **Operational risk measuring system**

(57) The invention relates to an operational risk measuring system wherein, in order to effectively utilize external case data in an operational risk measuring system, it is provided an operational risk measuring system including an external case database (1), an internal case database (2), a case data totaling device (3), external case workflow data (4), internal case workflow data (5), a case data converting device (6), a simulation condition input device (7), a device (8) for predicting the number of troubles, a loss amount calculating device (9), a loss amount frequency distribution generating device (10), a loss amount frequency distribution database (11), and a loss amount frequency distribution display device (12), wherein a structure of the internal case workflow data (5) and that of the external case workflow data (4) are compared with each other, the external case data (1) is corrected on the basis of a comparison result, and a risk is calculated by using, as an input case database, a database obtained by integrating the corrected external case database and the internal case database.

FIG. 1

EP 1 308 866 A1

**Description**

BACKGROUND OF THE INVENTION

The present invention relates to a system for measuring an operational risk in a financial institution or the like.

An operational risk denotes a loss produced by an error in a work procedure, an illegal act, a system down, or the like in a company.

An operational risk is basically a risk produced by a trouble in a company. Consequently, in order to measure the operational risk, a method of accumulating case data of troubles in the past in each company, predicting probability of occurrence of a trouble in the future and a loss amount caused by the trouble on the basis of the accumulated information, and calculating a risk by using the information as a reference is conventionally employed. Concretely, a method of performing a Monte Carlo simulation on the basis of the information and obtaining a probability distribution of loss amounts of an operational risk is often used.

SUMMARY OF THE INVENTION

As described above, an operational risk is measured on the basis of past case data in each company. To increase reliability of a result of measurement of a risk, it is therefore necessary to prepare a sufficient amount of past case data. Particularly, in the operational risk measurement, it is necessary to place emphasis on a risk of which occurrence frequency is low but which causes an enormous loss amount more than a risk of which occurrence frequency is high but which causes a small loss amount. Consequently, a certain amount of cases of which occurrence frequency is low has to be assured as necessary case data, so that an enormous number of case data is accordingly required.

However, at present, accumulation of case data is not sufficient in most of domestic companies. Under present conditions, to increase reliability of results of risk measurement, external case data of other companies has to be used to increase the case data.

The external data, however, is data of another company doing, for example, operations different from the company. There is, consequently, a problem such that integration of the data of the another company directly to data of the own company is an issue from the viewpoint of reliability of data.

To solve the problem, the present invention employs means which can compare external case workflow data describing a way of performing an operation of a company as a provider of external case data with internal case workflow data describing a way of performing an operation of an own company, and/or correcting the external case data so as to be adjusted to the internal case data by using a result of the comparison.

BRIEF DESCRIPTION OF THE DRAWINGS

FIG. 1 is basic configuration diagram of an operational risk measuring system.
FIG. 2 is flowchart of the whole process of the operational risk measuring system.
FIG. 3 is an example of a data recording format of an external case database regarding a work procedure.
FIG. 4 is an example of a data recording format of an external case database regarding a system.
FIG. 5 is an example of a data recording format of a distribution of handled amounts in a present operation unit.
FIG. 6 is an example of a data recording format of a distribution of handled amounts in a present system unit.
FIG. 7 is an example of a data recording format of a result of totaling of case data in a operation unit.
FIG. 8 is an example of a data recording format of a result of totaling of case data in a system unit.
FIG. 9 is an example of a data recording format of external case workflow data.
FIG. 10 is an explanatory diagram of an actual structure of workflow data.
FIG. 11 is a flow of processes of a case data converting device.
FIG. 12 is an explanatory diagram of a concrete example of calculating a coefficient of coincidence.
FIG. 13 is an example of a screen of a simulation condition input device.
FIG. 14 is a flow of processes of a device for predicting the number of troubles.
FIG. 15 is a flow of processes of a loss amount calculating device.
FIG. 16 is a flow of processes of a loss amount frequency distribution generating device.
FIG. 17 is an example of a data recording format of a loss amount frequency distribution database.
FIG. 18 is an example of a data recording format of a loss amount frequency distribution database in an operation unit.
FIG. 19 is an example of a data recording format of a loss amount frequency distribution database in a unit of combination of an operation and a trouble cause.

FIG. 20 is an example of a display screen of the loss amount frequency distribution display unit.

FIG. 21 is example of a hardware configuration.

DETAILED DESCRIPTION OF THE PREFERRED EMBODIMENT

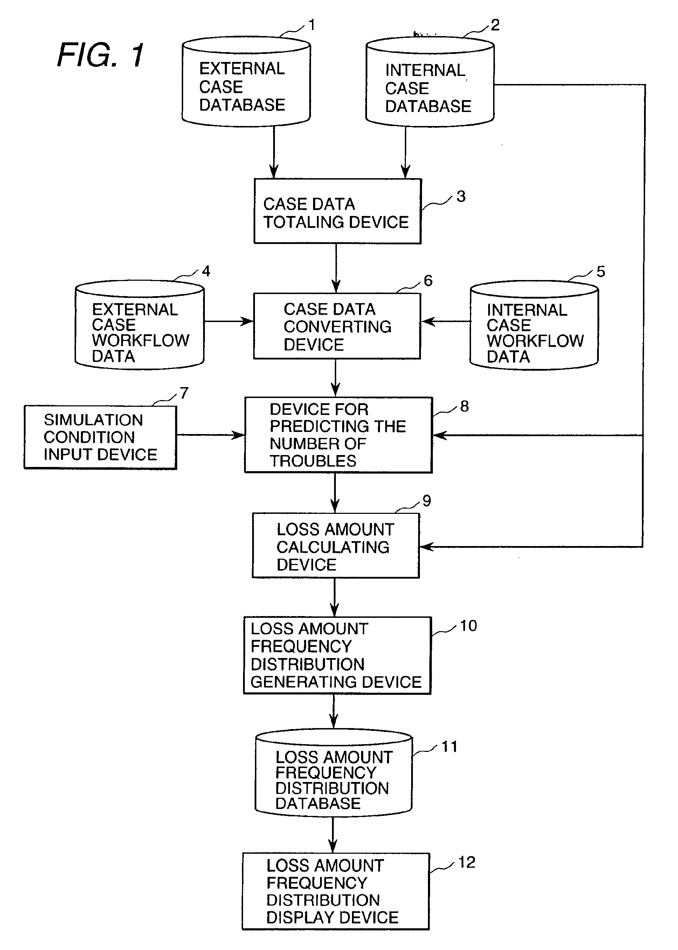

An embodiment of the present invention will be described in detail hereinbelow with reference to FIGS. 1 to 21. FIG. 1 shows a basic configuration of an operation risk measurement system according to the invention. The system basically includes 12 components of an external case database 1, an internal case database 2, a case data totaling device 3, external case workflow data 4, internal case workflow data 5, a case data converting device 6, a simulation condition input device 7, a device 8 for predicting the number of troubles, a loss amount calculating device 9, a loss amount frequency distribution generating device 10, a loss amount frequency distribution database 11, and a loss amount frequency distribution display device 12.

The external case database 1 is a database storing case data of an external company, which is data of past operation cases in a company different from an own company.

The internal case database 2 is a database storing internal case data of a company, which consists of data of past operation cases and data of present operation cases in the own company.

The case data totaling device 3 is a device of totaling the data of the case database independently with respect to the internal data and the external data so that the totaling process can be performed easily.

The external case workflow data 4 is external case workflow data describing the flow of operations of the another company.

The internal case workflow data 5 is internal case workflow data writing the flow of operations of the own company.

The case data converting device 6 is a device of correcting the external case data 1 so as to be matched with the internal case data 2 by comparing the structures of both of the workflows by using the internal cases workflow data 5 and the external case workflow data 4, and creating a case database obtained by integrating the external and internal case data.

The simulation condition input device 7 is a device for setting various conditions such as the number of simulation times in a simulation for measuring an operational risk.

The device 8 for predicting the number of troubles is a device of predicting the number of troubles which may occur in the future on the basis of the simulation conditions, internal case data and converted case data external case data.

The loss amount calculating device 9 is a device of predicting an amount of loss produced by each of the troubles predicted by the device 8 for predicting the number of troubles.

The loss amount frequency distribution generating device 10 is a device of integrating information of the loss amount predicated by the loss amount calculating device 9 and generating information regarding a frequency distribution of a total value of loss amounts as a result of measurement of the operational risk.

The loss amount frequency distribution database 11 is a database recording information regarding a frequency distribution of the total value of loss amounts generated by the loss amount frequency distribution generating device 10.

The loss amount frequency distribution display device 12 is a device of displaying a graph of the total amount frequency distribution as a result of measurement of the operational risk.

Measurement of an operational risk in the operational risk measurement system according to the invention is performed on the basis of case data. For this purpose, data of past operation cases and data of the contents of present operations in an own company is recorded in the internal case database 2, and data of past operation cases in another company is recorded in the external case database 1. By using the case data totaling device 3, the internal data and the external data is totaled individually so that the data in the case database can be statistically processed. By using the internal case workflow data 5 writing the flow of operations of the own company and the external case workflow data 4 writing the flow of operations of the another company, the structures of the external and internal workflows are compared with each other by using the case data converting device 6, thereby correcting the external case data so as to be matched with the internal case data, and a case database obtained by integrating the internal and external case data is created. After that, various conditions such as the number of simulation times in a simulation for measuring an operational risk are set by using the simulation condition input device 7.

Based on the information, the number of troubles which may occur in the future is predicted by using the device 8 for predicting the number of troubles, and the amount of loss which can be produced by each of the troubles predicted by the device 8 for predicting the number of troubles is predicated. Further, the loss amount frequency distribution generating device 10 totals the information of the loss amounts predicated by the loss amount calculating device 9, creates information regarding a frequency distribution of the total value of the loss amounts as a result of measurement of the operational risk, and records the created information into the loss amount frequency distribution database 11. By using the information of the loss amount frequency distribution database 11, the loss amount frequency distribution display device 12 displays a graph of the loss amount frequency distribution as a result of measurement of the operational risk.

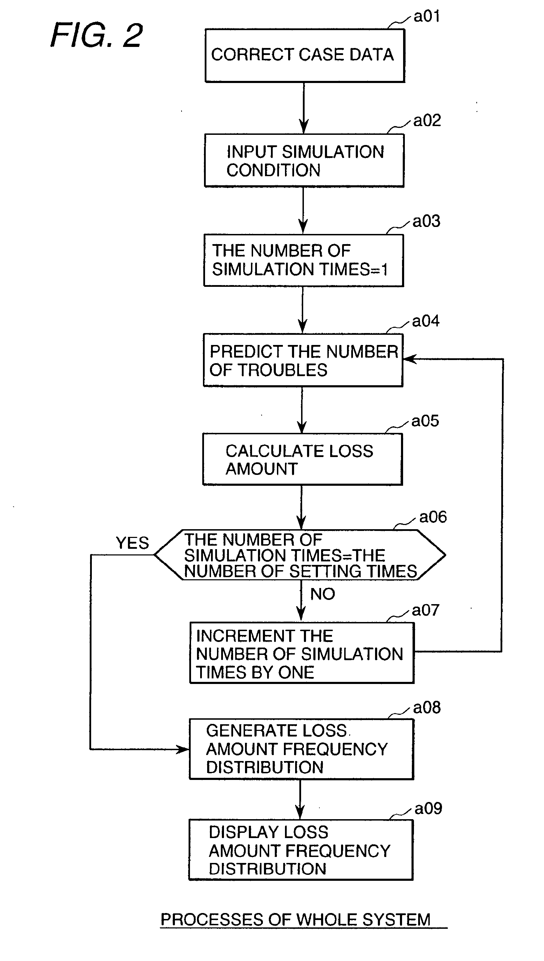

FIG. 2 shows the flowchart of the whole process of the operational risk measuring system according to the invention. In a process flow (a01), by comparing the structure of the operation workflow of another company and that of the workflow of the own company on an operation unit basis, the operation case data of another company is corrected so as to match with the operation case data of the own company, thereby forming the case database obtained by adding the case data of the own and another companies. In process flow (a02), the user is allowed to input the number of simulation times or the like as various conditions of a simulation executed to measure an operational risk. In process flow (a03), "1" is set as an initial setting value of the number of simulation times. In process flow (a04), the number of troubles which may occur in the future is predicted by using information of the case database. In process flow (a05), by using the information of the case database, the loss amounts of the number of troubles predicated by process flow (a04) are predicted and totaled. In process flow (a06), whether the number of simulation times at present has reached the number of simulation times entered in process flow (a02) or not is determined. If "NO", the program advances to process flow (a07). If "YES", the program advances to process flow (a08). In process flow (a07), "1" is added to the number of simulation times, and the program moves to process flow (a04).

In process flow (a08), based on the information of the loss amount calculated in each simulation, information of a frequency distribution of the loss amounts is created. In process flow (a09), based on information of the frequency distribution of the loss amount created in process flow (a08), a graph of the frequency distribution is displayed.

The system configuration of an embodiment of the operational risk measuring system according to the invention will be described in more detail hereinbelow by using a concrete example.

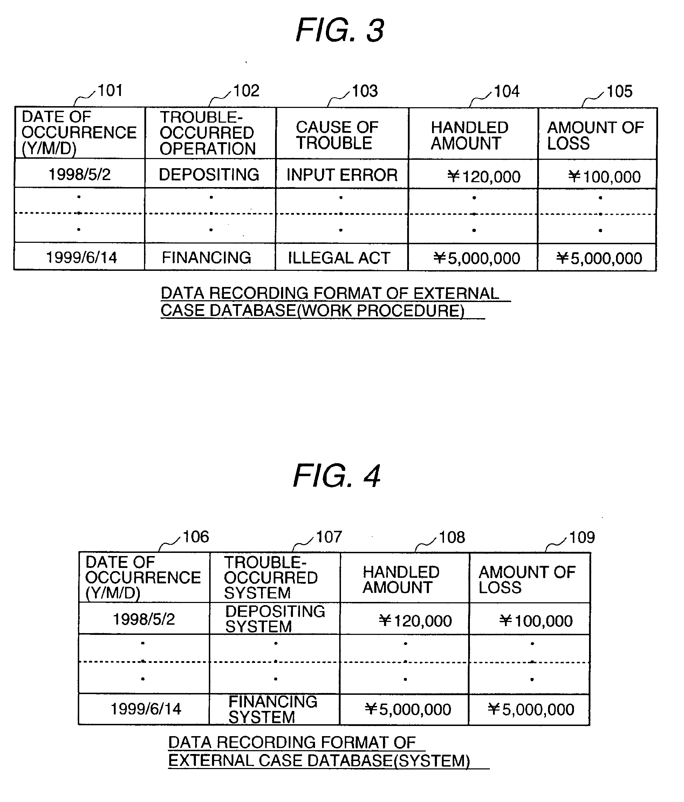

In the case database recording the case information of past operations, information regarding work procedures and information regarding systems is recorded. FIG. 3 shows an example of a data recording format of the external case database 1 regarding a work procedure. As the case data regarding a work procedure, information of a trouble regarding each operation is recorded. Concretely, for each trouble, date of occurrence of the trouble (101), an operation in which the trouble occurs (102), the cause of the trouble (103), a handled amount (104) in the job where the trouble occurred, and an amount (105) calculated as a loss amount in the handled amount are recorded.

FIG. 4 shows an example of a data recording format of the external case database 1 regarding systems. As the case data regarding systems, information of troubles regarding each system is recorded. Concretely, for each trouble, date of occurrence of the trouble (106), a system (107) in which the trouble occurred, a handled amount (108) in a work item where the trouble occurred, and an amount (109) calculated as a loss amount in the handled amount are recorded.

The data recording format of information to be recorded on the internal case database 2 is similar to that of the external case database 1 (FIGS. 3 and 4) with respect to the past operation work case data regarding the work procedure and the system except that, in the internal case database 2, in addition to the above information, information of present operations and the handled amount in the system is recorded.

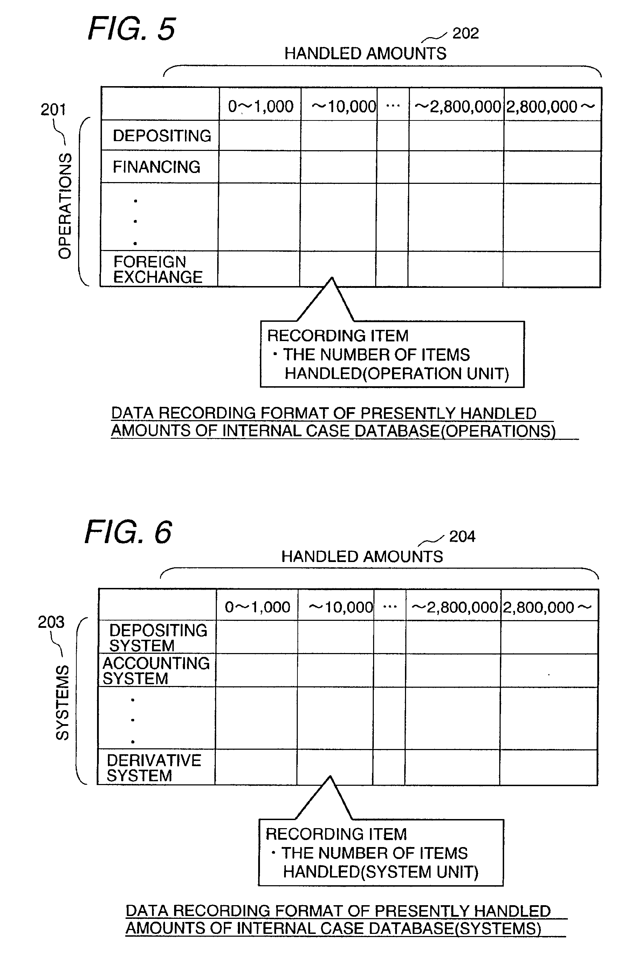

FIG. 5 shows an example of a data recording format of a database of the handled amount at present of each of operations in the internal case database 2. In the database, a distribution of handled amounts in each operation is recorded in the form of the frequency distribution. Concretely, a matrix defining operations (201) in the vertical axis and divisions (202) of the handled amounts in the horizontal axis is formed, and the number of items of each operation, which fall in the range of the applicable division of the handled amounts is recorded as a handled number for each of the elements in the matrix.

FIG. 6 shows an example of the data recording format of a database of presently handled amounts of each system, in the internal case database 2. In the database, the distribution of the handled amounts in each system is recorded as a frequency distribution. Concretely, a matrix defining systems (203) in the vertical axis and divisions (204) of the handled amounts in the horizontal axis is formed, and the number of items of each operation, which fall in the range of each division of the handled amount is recorded as a handled number for each of the elements of the matrix.

The case data totaling device 3 totals the information of the past operation cases recorded in the external case database 1 and the internal case database 2 so that the information can be easily processed for statistics. The totaling is performed individually on the external case data and the internal case data. Further, each of the external and internal case data is totaled individually with respect to the case regarding the work procedures and the case regarding the systems.

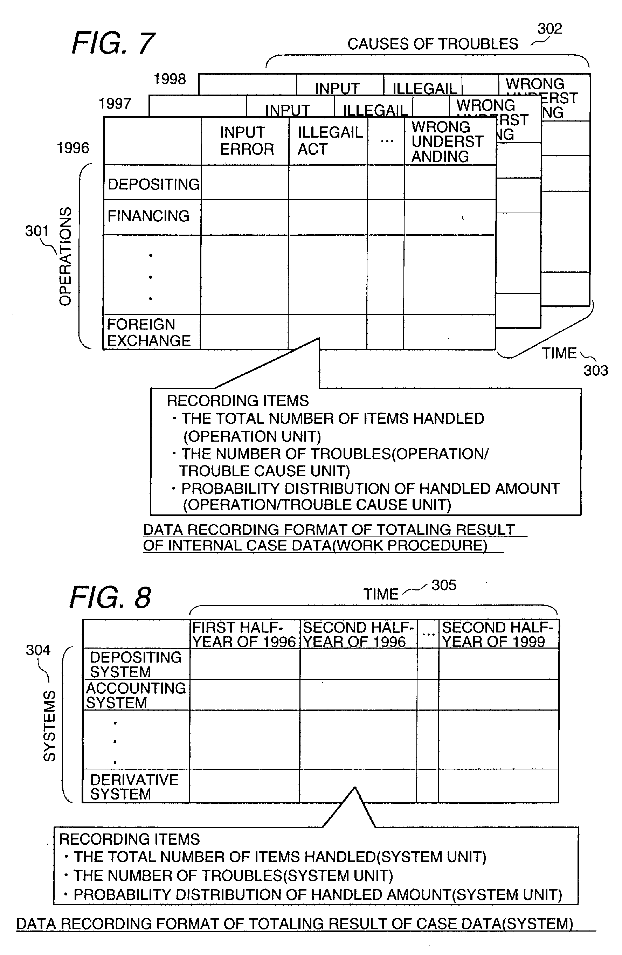

FIG. 7 shows an example of a data recording format of the results of totaling the case data regarding the work procedure added up by the case data totaling device 3. The database has the structure of a three-dimensional database having three axes of an axis (301) indicating operations such as depositing and financing, an axis (302) indicating the details of troubles such as an input error and an illegal act, and an axis (303) indicating time such as 1996 and 1997. With respect to each of the elements of the database, information of the total number of works handled in the past, the number of troubles occurred in the past, and a probability distribution of a handled amount of an item in which a trouble occurred is extracted from the case database and recorded.

FIG. 8 shows an example of a data recording format of results of totaling the case data regarding systems totaled by the case data totaling device 3. The database has the structure of a two-dimensional database having two axes of an axis (304) indicating systems such as a depositing system and an accounting system and an axis (305) indicating time such as 1996 and 1997. With respect to each of the elements of the database, information of the total number of works handled in the past, the number of troubles occurred in the past, and a probability distribution of handled amounts of an item in which a trouble occurs is extracted from the case database and recorded.

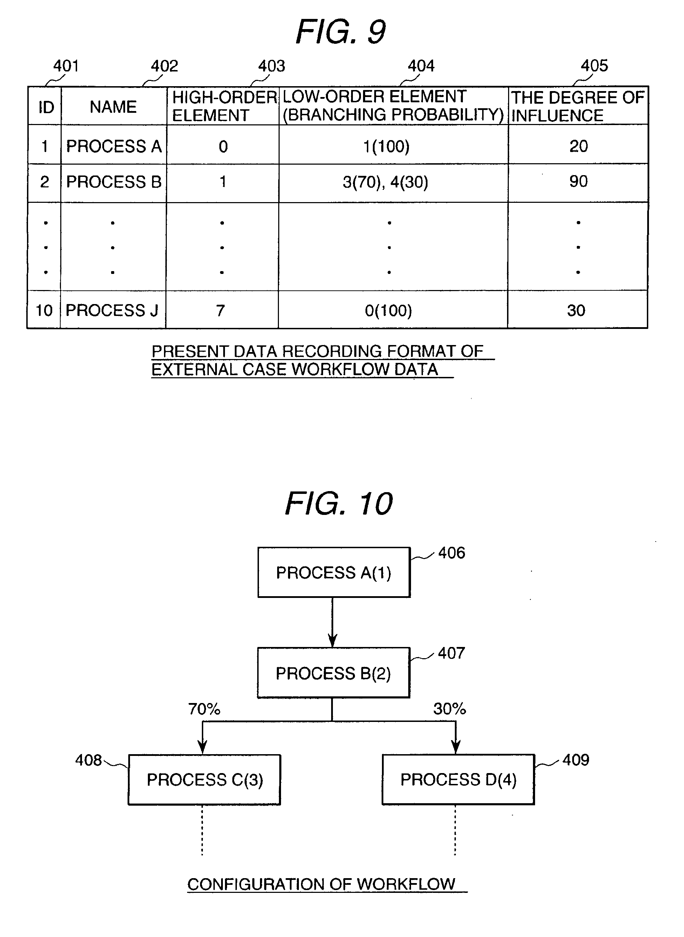

FIG. 9 shows an example of the data recording format of external case workflow data. Data is recorded on an operation unit basis. As the structure of data, a form of recording data on the unit basis of an element of the workflow is used. Concretely, for each element, information of the ID of the element (401), the name (402) of the element, the ID (403) of a high-order element connected to the element, the ID of a low-order element connected to the element and a branching probability at the time of connecting the element to each low-order element (404), and the degree of influence (405) of the element, exerted on the whole operation is recorded.

FIG. 10 shows an example of the structure of a workflow to which the workflow data illustrated in FIG. 9 corresponds, as an example of definition of workflow data. It shows that, after a process A (406), the program unconditionally advances to a process B (407). After the process B (407), the program advances to a process C (408) at the probability of 70%, and advances to a process D (409) at the probability of 30%.

The data format of information recorded on the internal case workflow data 5 is the same as the data recording format of the above-described external case workflow data 4.

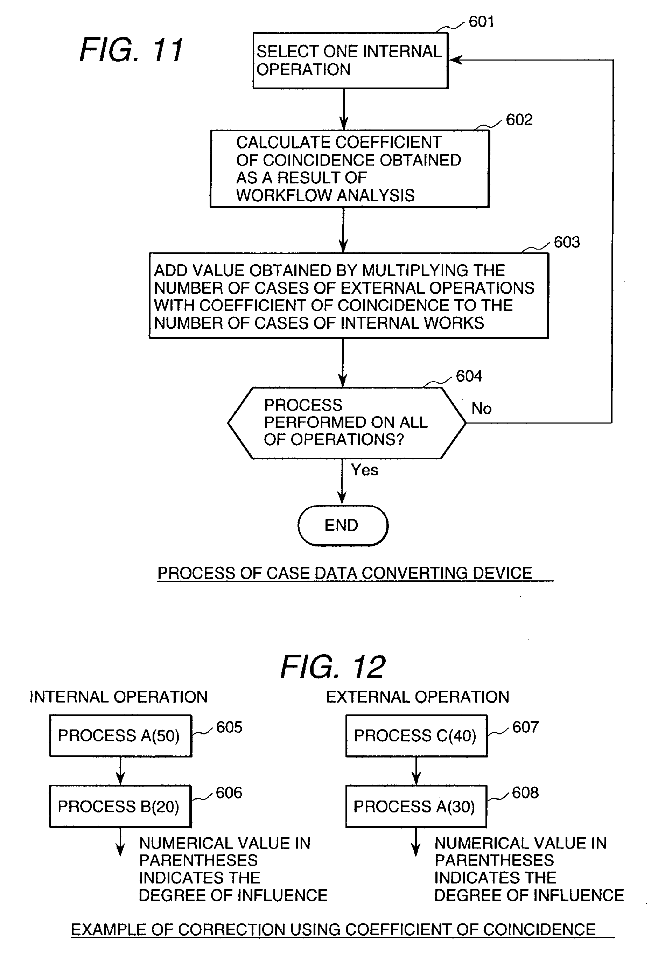

FIG. 11 shows an example of the flow of processes in the case data converting device 6. In a process flow (601), one of operations to be processed is selected.

In the processing flow (602), the structure of the external case workflow and that of the internal case workflow are compared with each other. If there is an element common to the structures, a basic coincidence coefficient is calculated by the following equation (1) for each element.

$$\text{Basic coincidence coefficient} = (\text{the degree of}$$

$$\text{influence of the element in the external case}/100) \times (\text{the}$$

$$\text{degree of influence of the element in the internal}$$

$$\text{case}/100) \qquad\qquad (\text{Equation 1})$$

Further, higher and lower elements connected to the common element are checked. If there is also a common element in the higher and lower elements connected, the sum of the branching probability (percentage) at the time of connection to the elements is also calculated. A value obtained by adding "1" to the value of the sum is defined as a correction factor, and a final coefficient of coincidence is obtained by the following equation (2).

$$\text{Coincidence coefficient} = \text{basic coincidence}$$

$$\text{coefficient} \times \text{correction factor} \qquad\qquad (\text{Equation 2})$$

In process flow (603), a value obtained by multiplying each of the parameters of the external case data (the total number of handled operations, the number of troubles, and the value of the frequency for each division in the probability distribution of the handled amount) with the coefficient of coincidence calculated in process flow (602) is added to the value of the parameter of the same kind of internal case data.

In process flow (604), whether the process has been performed on all of operations or not is determined. If there is an operation which has not been processed yet, the program returns to process flow (601). If processes on all of operations have been finished, the whole process is finished. Although correction of information regarding operations has been described above, correction of information regarding a system is executed by a similar logic.

A concrete example of the correction using a coefficient of coincidence will be described by referring to FIG. 12. When the internal case workflow and the external case workflow are compared with each other, it is understood that a process A (605) of the internal case workflow and a process A (608) of the external case workflow coincide with each other. Since the degree of influence of the element of the process A (605) is 50 and that of the process A (608) is 30, the basic coincidence coefficient is obtained by the following equation (3) from the equation (1).

$$\text{coefficient of coincidence} = 0.5 \times 0.3 = 0.15 \qquad \text{(Equation 3)}$$

When the higher and lower elements connected to the process A are checked, the process B (606) is connected in the internal case workflow whereas the process C (607) is connected in the external case workflow, and there is no common element. Therefore, the correction coefficient is 1. That is, the final coefficient of coincidence is obtained by the following equation 4.

$$\text{coefficient of coincidence} = 0.15 \times 1 = 0.15 \qquad \text{(Equation 4)}$$

By adding a value obtained by multiplying the above value with each of parameters of the external case data to each of the parameters of the internal case data, a data correcting process is performed.

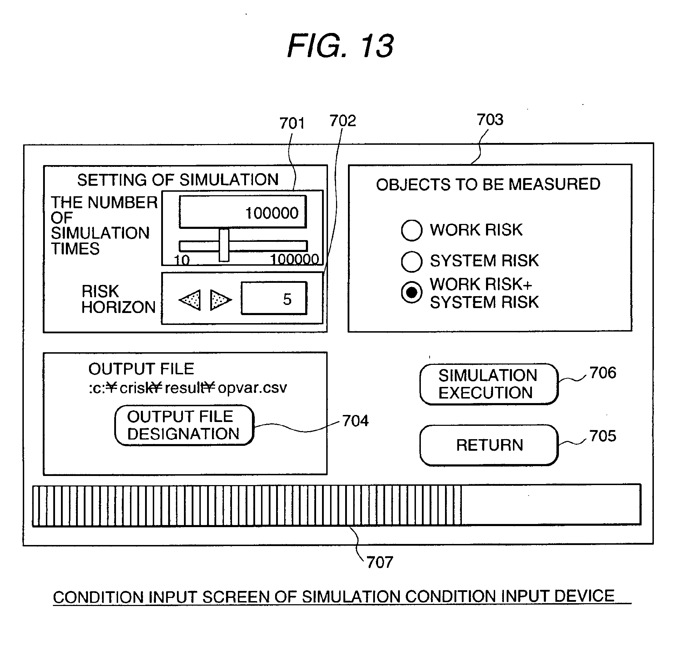

FIG. 13 shows an example of a condition input screen of the simulation condition input device 7. On the condition input screen, the number of simulation times input part (701), a risk horizon setting part (702), an object to be measured selecting part (703), an output file designation button (704), a return button (705), a simulation execution button (706), and a progress bar (707) are provided.

As the simulation conditions, the number of simulation times (701), risk horizon (702) defining years for which the risk is calculated, and selection (703) of an object to be measured, from calculation of only risks regarding work procedures, calculation of only risks regarding systems, and calculation of both risks regarding work procedures and risks regarding systems can be entered as operational risks. By clicking the output file designation button (704), an output file name can be designated. By clicking the simulation execution button (706), a simulation is started under the set conditions, and a progress of the simulation is indicated by the progress bar (707) during execution of the simulation. By clicking the return button (705), setting of the simulation conditions is finished.

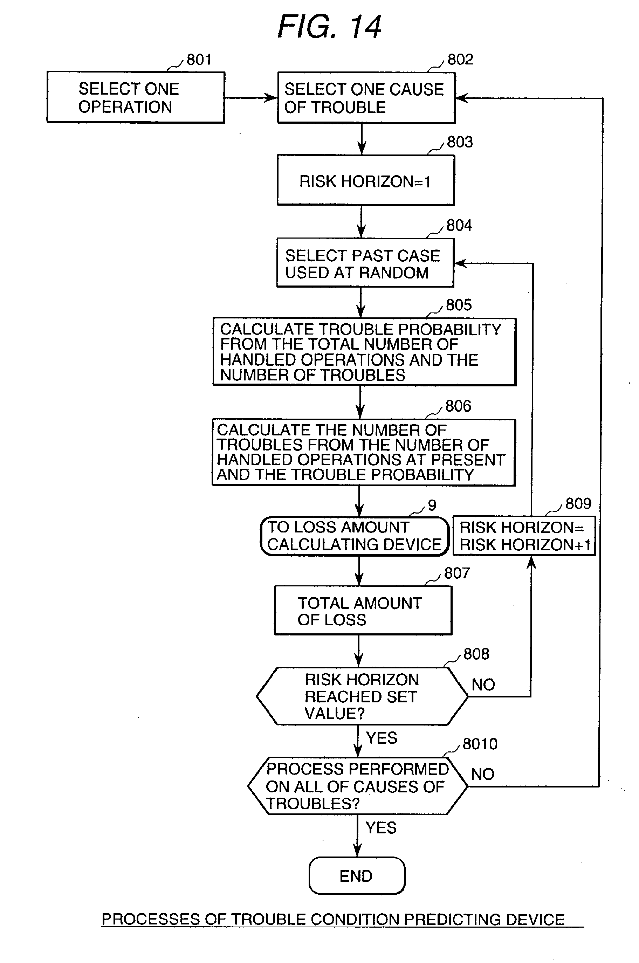

FIG. 14 shows an example of the flow of processes in the device 8 for predicting the number of troubles. FIG. 14 shows a case of predicting the number of troubles regarding an operation. In a process flow (801), one of operations is selected as an operation of which the number of troubles is to be predicted. In process flow (802), one of the causes (contents) of troubles of which number is predicted is selected. In process flow (803), "1" is set as the risk horizon. In process flow (804), one of case information in the past having the cause of the trouble similar to that of the operation of which number of troubles is to be predicted is selected at random.

In process flow (805), on the basis of the information of the past case selected in process flow (804), the trouble occurrence probability is calculated by the following equation (5).

$$\text{Trouble occurrence probability} = \text{the number of}$$

$$\text{troubles/the number of total number of handled}$$

$$\text{operations} \qquad \text{(Equation 5)}$$

In process flow (806), by multiplying the value of the total number of operations handled in the operations as targets at present and recorded in the internal case database 2 with the trouble occurrence probability calculated by Equation 5, a prediction value of the number of troubles is calculated. According to the calculated number of troubles, a loss amount is calculated by the loss amount calculating device 9 on a trouble unit basis.

In process flow (807), the loss amounts calculated by the loss amount calculating device 9, of the number of troubles are added up, thereby obtaining the final loss amount value. In process flow (808), whether the value of the risk horizon has reached the value of the risk horizon input by the simulation condition input device 7 or not is determined. If "NO", the program advances to process flow (809). If "YES", the program advances to process flow (8010). In process flow (809), "1" is added to the value of the risk horizon, and the program moves to process flow (804).

In process flow (8010), whether the processes have been performed on all of the trouble causes or not is determined. If the processes have not been performed on all of the trouble causes yet, the program moves to process flow (802). If the processes have been performed on all of the trouble causes, the whole processes are finished.

The above case relates to an example of calculation on one operation. In reality, the value of the loss amount is calculated by the process on all of the operations. The above case relates to a case of calculating the loss amount regarding operations. In the case of calculating a loss amount regarding a system, processes similar to those of the case of calculating the loss amount regarding operations are performed except that the loop process regarding the trouble cause (process flows (802) and (8010)) is not executed.

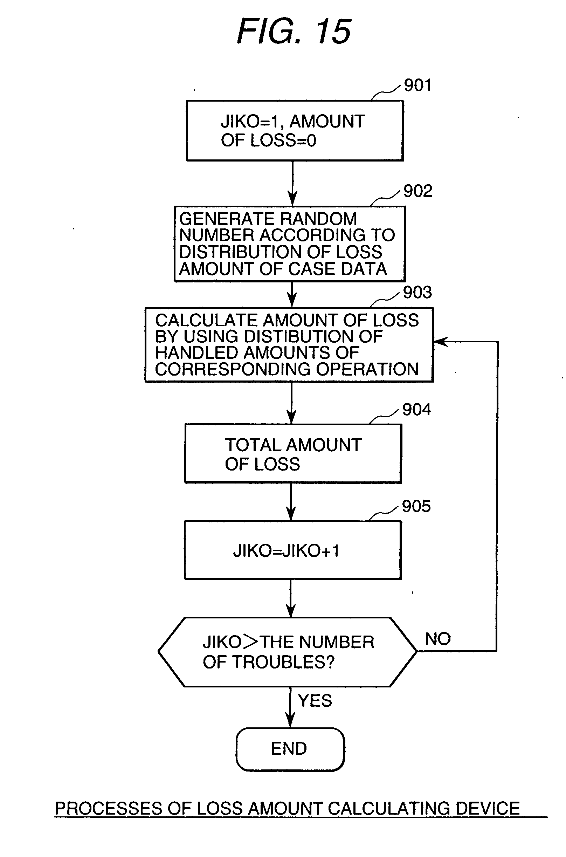

FIG. 15 shows an example of the flow of processes in the loss amount calculating device 9. In process flow (901), an initializing process is performed by setting JIKO = 1 and the amount of loss = 0. In process flow (902), by using the information of the probability distribution of the handled amounts in the past of the element according to the operation (or system) and the trouble cause, a random number according to the distribution is generated. In process flow (903), by substituting the random number generated in process flow (902) for the probability distribution of the present handled amount of the applicable operation (or system) recorded in the internal case database 2, the value of the loss amount in the trouble is calculated. In process flow (904), the loss amounts calculated in process flow (903) are added up on the trouble unit basis. In process flow (905), "1" is added to the value of JIKO. In process flow (906), whether the value of JIKO is larger than the value of the number of troubles calculated by the device 8 for predicting the number of troubles or not is determined. When the value of JIKO is equal to or lower than the number of troubles, the program moves to process flow (903). When the value of JIKO is larger than the number of troubles, the whole process is finished.

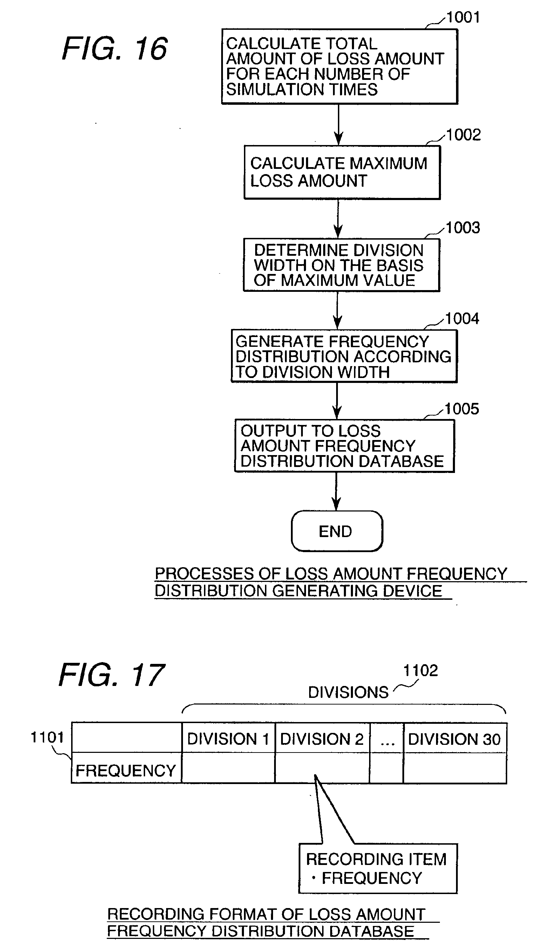

FIG. 16 shows an example of process flow of the loss amount frequency distribution generating device 10. In process flow (1001), a total value of the loss amounts of operations (or systems) is calculated for each number of simulation times. In process flow (1002), based on the calculation result of process flow (1001), the maximum value of the loss amount is calculated. In process flow (1003), by diving the maximum value of the loss amount calculated by process flow (1002) by a specified number of division, a division width of the loss amount used at the time of generating a frequency distribution is calculated. In process flow (1004), the frequency distribution of loss amounts is calculated according to the division width obtained in process flow (1003). In process flow (1005), the information of the frequency distribution obtained in process flow (1004) is output to the loss amount frequency distribution database 11, and the whole process is finished.

In the above case, a frequency distribution is generated with respect to a total value of loss amounts of each operation (or system). It is also possible to generate a frequency distribution on the unit basis of each operation, each system, combination of each operation and each trouble cause, or the like, record the information of the frequency distribution to the loss amount frequency distribution database 11 on the unit basis, and display the information on the loss amount frequency distribution display device 12.

FIG. 17 shows an example of a data recording format of the loss amount frequency distribution database 11. In the database, the frequency (1101) in each division (1102) according to the division width calculated in the loss amount frequency distribution generating device 10 is recorded.

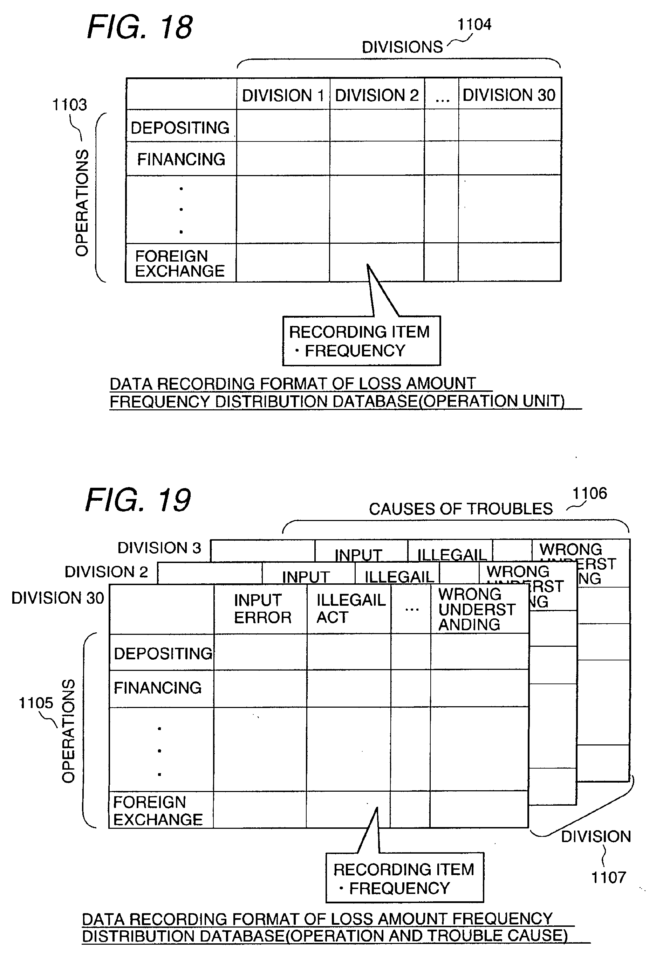

The information of the frequency distribution can be calculated not only as a whole but also on the operation unit basis, a system unit basis, and a unit basis of combination of an operation and a trouble cause. FIG. 18 shows an example of the data recording format for recording information of the frequency distribution on an operation unit basis. The database has the structure of a two-dimensional database having a horizontal axis expressing the division (1104) according to the division width calculated by the loss amount frequency distribution generating device 10 and a vertical axis indicating the operation (1103). For each of elements of the database, the frequency corresponding to the element is recorded. Also in the case of recording data on the system unit basis, the structure of the database is similar to that shown in FIG. 17 except that the operation is replaced with the system.

FIG. 19 shows an example of a data recording format at the time of recording information of the frequency distribution on the unit basis of combination of an operation and a trouble cause. The database has the structure of a three-dimensional database constructed by three axes of the division (1107) according to the division width calculated by the loss amount frequency distribution generating device 10, operation (1105), and trouble cause (1106). For each of the elements of the database, the value of the frequency corresponding to the element is recorded.

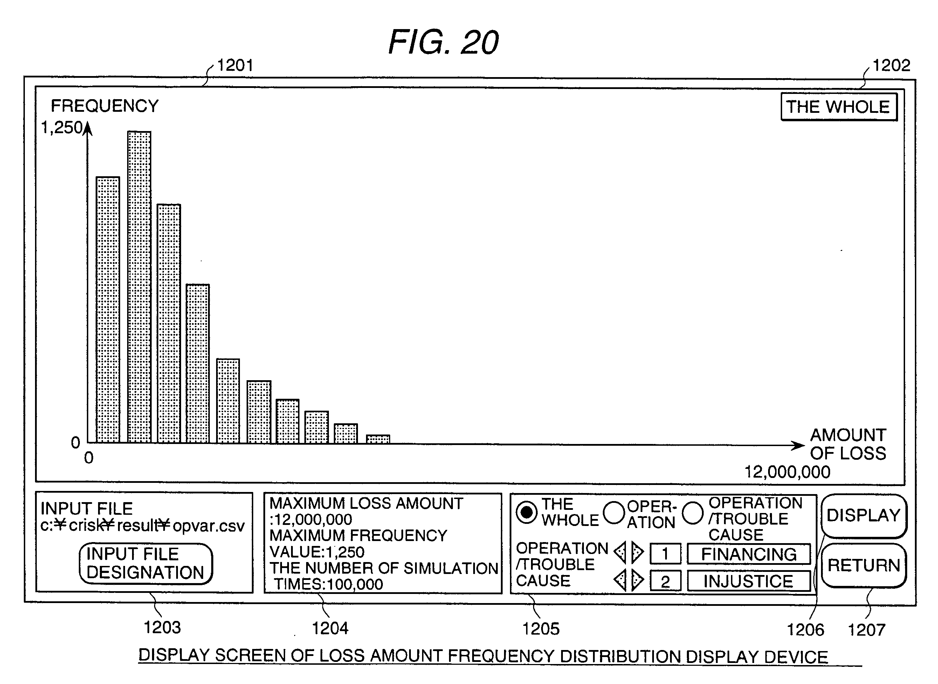

FIG. 20 shows an example of a display screen of the loss amount frequency distribution display device 12. On the display screen, a frequency distribution graph (1201), an input file designation part (1202), an input file unit display part (1203), a quantitative information display unit (1204) regarding a frequency distribution, a frequency distribution graph kind selecting part (1205), a display button (1206), and a return button (1207) are displayed.

First, an input file is designated by using a file designation interface presented after the input file designation button (1203) is clicked. The kind of the graph of the frequency distribution displayed is selected from the whole, operation unit, and the like (1205). By clicking the display button (1206), information of the frequency distribution designated is read from the loss amount frequency distribution database and displayed as the frequency distribution graph (1201). At this time, information (1202) showing which unit of the frequency distribution of the displayed graph and quantitative information regarding the frequency distribution (maximum loss amount, maximum frequency value, the number of simulation times, and the like) (1204) is also displayed. By clicking the return button (1207), the displaying process is finished.

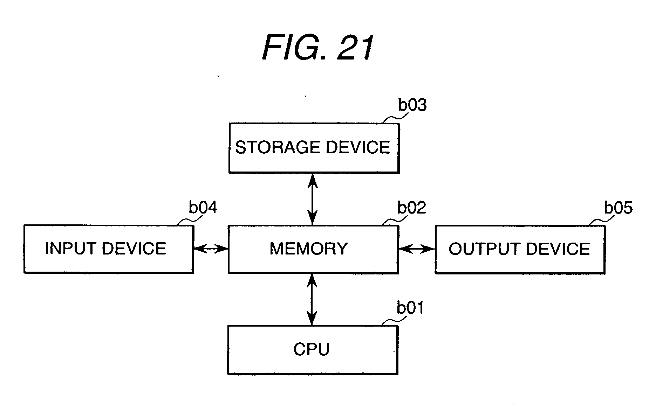

An example of the process in the invention has been described above. In the case of systematizing the process in reality, as shown in FIG. 21, in hardware constructed by a CPU b01, a memory b02, a storage device b03, an input device b04, and an output device b05, a method of transferring a program and a database of the invention recorded in the storage device b03 to the memory 0b2, performing a process by the CPU b01 on the basis of instruction information given from the input device b04, and displaying the result on the output device b05 is used.

In the above description, the example of using not only the internal database but also the external database, comparing the workflow data of the internal and external databases, correcting the external case data on the basis of the comparison result, and measuring an operational risk has been explained. Alternately, it is also possible to use only the internal database, compare workflow data in an arbitrary operation unit with workflow data in a different operation unit, correct data in the different operation unit by using the comparison result, and measure the operational risk.

In short, in the operational risk measuring system for calculating a trouble occurrence probability and a probability distribution of an amount of loss produced by a trouble on the basis of information of a case database recording cases of troubles in past operations, and predicting the number of troubles to be occurred in the future and a loss amount in each of the troubles by using the information, having: a case database recording cases of past operations of an own company; and workflow data describing the flow of operations of the own company on an operation unit basis, the structure of workflow data of an arbitrary operation is compared with that of workflow data of an operation different from the arbitrary operation, the case data of the different operation is corrected on the basis of a result of the comparison, and a risk is calculated by using a database obtained by integrating the corrected case database and the case database of the arbitrary operation as an input case database.

According to the invention, at the time of measuring an operational risk by using external case data, the external case data can be corrected so as to match with the internal case data. Thus, the reliability of measurement results can be increased.

**Claims**

1. An operational risk measuring system for calculating a trouble occurrence probability and a probability distribution of an amount of loss produced by a trouble on the basis of information of a case database recording cases of troubles in past operations, and predicting the number of troubles to be occurred in the future and a loss amount in each of the troubles by using said information, comprising:

   an internal case database (2) recording cases of past operations of an own company;
   an external case database (1) recording cases of past operations of another company;
   internal case workflow data (5) describing the flow of operations of the own company; and
   external case workflow data (4) describing the flow of operations of the another company,

   **characterized in that** a structure of said internal case workflow data (5) and that of said external case workflow data (4) are compared with each other, the external case data is corrected on the basis of a result of said comparison, and a risk is calculated by using, as an input case database, a database obtained by integrating said corrected external case database (1) and the internal case database (2).

2. An operational risk measuring system for calculating a trouble occurrence probability and a probability distribution of an amount of loss produced by a trouble on the basis of information of a case database recording cases of troubles in past operations, and predicting the number of troubles to be occurred in the future and a loss amount in each of the troubles by using said information, comprising:

   a case database (2) recording cases in the past of an own company on an operation unit basis; and
   workflow data (5) describing the flow of operations of the own company on the operation unit basis;

   **characterized in that** a structure of workflow data of an arbitrary operation and that of workflow data of an operation different from said arbitrary operation are compared with each other, the case data of the different operation is corrected on the basis of a result of said comparison, and a risk is calculated by using, as an input case database, a database obtained by integrating said corrected cause database and the case database of said arbitrary operation.

3. The operational risk measuring system according to claim 1, wherein at the time of comparing the structures of the two kinds of workflow data, the case data is corrected on the basis of the number of elements commonly existing in both of the workflow data among elements constructing the two kinds of the workflow data.

4. The operational risk measuring system according to claim 2, wherein at the time of comparing the structures of the two kinds of workflow data, the case data is corrected on the basis of the number of elements commonly existing in both of the workflow data among elements constructing the two kinds of the workflow data.

**5.** The operational risk measuring system according to claim 1, wherein at the time of comparing the structures of the two kinds of workflow data, the case data is corrected on the basis of the kind and the number of workflow elements connected to an element commonly existing in both of the workflow data among elements constructing both of the workflow data.

**6.** The operational risk measuring system according to claim 2, wherein at the time of comparing the structures of the two kinds of workflow data, the case data is corrected on the basis of the kind and the number of workflow elements connected to an element commonly existing in both of the workflow data among elements constructing both of the workflow data.

**7.** The operational risk measuring system according to claim 1, wherein when a value of the degree of influence of each of elements constructing workflow data, exerted on a workflow itself is set and the structures of the two kinds of workflow data are compared with each other, the case data is corrected on the basis of the number of elements commonly existing in both of the workflow data among elements constructing both of the workflow data and the value of the degree of influence defined for the elements.

**8.** The operational risk measuring system according to claim 2, wherein when a value of the degree of influence of each of elements constructing workflow data, exerted on a workflow itself is set and the structures of the two kinds of workflow data are compared with each other, the case data is corrected on the basis of the number of elements commonly existing in both of the workflow data among elements constructing both of the workflow data and the value of the degree of influence defined for the elements.

## FIG. 1

*FIG. 2*

```
                          ┌─────────────────────┐ ⌐a01
                          │ CORRECT CASE DATA   │
                          └──────────┬──────────┘
                                     │
                                     ▼
                          ┌─────────────────────┐ ⌐a02
                          │ INPUT SIMULATION    │
                          │ CONDITION           │
                          └──────────┬──────────┘
                                     │
                                     ▼
                          ┌─────────────────────┐ ⌐a03
                          │ THE NUMBER OF       │
                          │ SIMULATION TIMES=1  │
                          └──────────┬──────────┘
                                     │
                                     ▼
                          ┌─────────────────────┐ ⌐a04
                          │ PREDICT THE NUMBER  │◄──────┐
                          │ OF TROUBLES         │       │
                          └──────────┬──────────┘       │
                                     │                  │
                                     ▼                  │
                          ┌─────────────────────┐ ⌐a05  │
                          │ CALCULATE LOSS      │       │
                          │ AMOUNT              │       │
                          └──────────┬──────────┘       │
                                     │                  │
                                     ▼                  │
              YES     ╱───────────────────────────╲ ⌐a06 │
         ◄───────────┤ THE NUMBER OF              │      │
         │           │ SIMULATION TIMES=THE       │      │
         │           ╲ NUMBER OF SETTING TIMES   ╱      │
         │            ───────────┬───────────────       │
         │                       │ NO                   │
         │                       ▼                      │
         │            ┌─────────────────────┐ ⌐a07       │
         │            │ INCREMENT THE       │           │
         │            │ NUMBER OF SIMULATION│───────────┘
         │            │ TIMES BY ONE        │
         │            └─────────────────────┘
         │
         │            ┌─────────────────────┐ ⌐a08
         └───────────►│ GENERATE LOSS       │
                      │ AMOUNT FREQUENCY    │
                      │ DISTRIBUTION        │
                      └──────────┬──────────┘
                                 │
                                 ▼
                      ┌─────────────────────┐ ⌐a09
                      │ DISPLAY LOSS        │
                      │ AMOUNT FREQUENCY    │
                      │ DISTRIBUTION        │
                      └─────────────────────┘
```

PROCESSES OF WHOLE SYSTEM

## FIG. 3

| DATE OF OCCURRENCE (Y/M/D) 101 | TROUBLE-OCCURRED OPERATION 102 | CAUSE OF TROUBLE 103 | HANDLED AMOUNT 104 | AMOUNT OF LOSS 105 |
|---|---|---|---|---|
| 1998/5/2 | DEPOSITING | INPUT ERROR | ¥120,000 | ¥100,000 |
| · | · | · | · | · |
| · | · | · | · | · |
| 1999/6/14 | FINANCING | ILLEGAL ACT | ¥5,000,000 | ¥5,000,000 |

DATA RECORDING FORMAT OF EXTERNAL
CASE DATABASE(WORK PROCEDURE)

## FIG. 4

| DATE OF OCCURRENCE (Y/M/D) 106 | TROUBLE-OCCURRED SYSTEM 107 | HANDLED AMOUNT 108 | AMOUNT OF LOSS 109 |
|---|---|---|---|
| 1998/5/2 | DEPOSITING SYSTEM | ¥120,000 | ¥100,000 |
| · | · | · | · |
| · | · | · | · |
| 1999/6/14 | FINANCING SYSTEM | ¥5,000,000 | ¥5,000,000 |

DATA RECORDING FORMAT OF
EXTERNAL CASE DATABASE(SYSTEM)

## FIG. 5

~ 202

HANDLED AMOUNTS

| | 0~1,000 | ~10,000 | ... | ~2,800,000 | 2,800,000~ |
|---|---|---|---|---|---|
| DEPOSITING | | | | | |
| FINANCING | | | | | |
| . . . | | | | | |
| FOREIGN EXCHANGE | | | | | |

201 OPERATIONS

RECORDING ITEM
· THE NUMBER OF ITEMS
  HANDLED(OPERATION UNIT)

DATA RECORDING FORMAT OF PRESENTLY HANDLED
AMOUNTS OF INTERNAL CASE DATABASE(OPERATIONS)

## FIG. 6

~ 204

HANDLED AMOUNTS

| | 0~1,000 | ~10,000 | ... | ~2,800,000 | 2,800,000~ |
|---|---|---|---|---|---|
| DEPOSITING SYSTEM | | | | | |
| ACCOUNTING SYSTEM | | | | | . |
| . . . | | | | | |
| DERIVATIVE SYSTEM | | | | | |

203 SYSTEMS

RECORDING ITEM
· THE NUMBER OF ITEMS
  HANDLED(SYSTEM UNIT)

DATA RECORDING FORMAT OF PRESENTLY HANDLED
AMOUNTS OF INTERNAL CASE DATABASE(SYSTEMS)

## FIG. 7

CAUSES OF TROUBLES ~ 302

1998

1997

1996

301 OPERATIONS

| | INPUT ERROR | ILLEGAIL ACT | ... | WRONG UNDERST ANDING |
|---|---|---|---|---|
| DEPOSITING | | | | |
| FINANCING | | | | |
| . . . | | | | |
| FOREIGN EXCHANGE | | | | |

TIME ~ 303

RECORDING ITEMS
· THE TOTAL NUMBER OF ITEMS HANDLED (OPERATION UNIT)
· THE NUMBER OF TROUBLES(OPERATION/ TROUBLE CAUSE UNIT)
· PROBABILITY DISTRIBUTION OF HANDLED AMOUNT (OPERATION/TROUBLE CAUSE UNIT)

DATA RECORDING FORMAT OF TOTALING RESULT OF INTERNAL CASE DATA(WORK PROCEDURE)

## FIG. 8

TIME ~ 305

304 SYSTEMS

| | FIRST HALF-YEAR OF 1996 | SECOND HALF-YEAR OF 1996 | ... | SECOND HALF-YEAR OF 1999 |
|---|---|---|---|---|
| DEPOSITING SYSTEM | | | | |
| ACCOUNTING SYSTEM | | | | |
| . . . | | | | |
| DERIVATIVE SYSTEM | | | | |

RECORDING ITEMS
· THE TOTAL NUMBER OF ITEMS HANDLED(SYSTEM UNIT)
· THE NUMBER OF TROUBLES(SYSTEM UNIT)
· PROBABILITY DISTRIBUTION OF HANDLED AMOUNT(SYSTEM UNIT)

DATA RECORDING FORMAT OF TOTALING RESULT OF CASE DATA(SYSTEM)

## FIG. 9

| ID | NAME | HIGH-ORDER ELEMENT | LOW-ORDER ELEMENT (BRANCHING PROBABILITY) | THE DEGREE OF INFLUENCE |
|----|------|--------------------|-------------------------------------------|-------------------------|
| 1 | PROCESS A | 0 | 1(100) | 20 |
| 2 | PROCESS B | 1 | 3(70), 4(30) | 90 |
| . | . | . | . | . |
| . | . | . | . | . |
| . | . | . | . | . |
| 10 | PROCESS J | 7 | 0(100) | 30 |

401　　402　　403　　404　　405

PRESENT DATA RECORDING FORMAT OF
EXTERNAL CASE WORKFLOW DATA

## FIG. 10

PROCESS A(1) ⌐406

↓

PROCESS B(2) ⌐407

70%　　　　　　　30%

408⌐ PROCESS C(3)　　　　　PROCESS D(4) ⌐409

CONFIGURATION OF WORKFLOW

*FIG. 11*

SELECT ONE INTERNAL OPERATION ~601

↓

CALCULATE COEFFICIENT OF COINCIDENCE OBTAINED AS A RESULT OF WORKFLOW ANALYSIS ~602

↓

ADD VALUE OBTAINED BY MULTIPLYING THE NUMBER OF CASES OF EXTERNAL OPERATIONS WITH COEFFICIENT OF COINCIDENCE TO THE NUMBER OF CASES OF INTERNAL WORKS ~603

↓

PROCESS PERFORMED ON ALL OF OPERATIONS? ~604  No

Yes

↓

END

PROCESS OF CASE DATA CONVERTING DEVICE

*FIG. 12*

INTERNAL OPERATION

PROCESS A(50) ~605

↓

PROCESS B(20) ~606

↓ NUMERICAL VALUE IN PARENTHESES INDICATES THE DEGREE OF INFLUENCE

EXTERNAL OPERATION

PROCESS C(40) ~607

↓

PROCESS A(30) ~608

↓ NUMERICAL VALUE IN PARENTHESES INDICATES THE DEGREE OF INFLUENCE

EXAMPLE OF CORRECTION USING COEFFICIENT OF COINCIDENCE

# FIG. 13

701  702  703

SETTING OF SIMULATION

THE NUMBER OF SIMULATION TIMES

100000

10          100000

RISK HORIZON  ◁ ▷  5

OBJECTS TO BE MEASURED

○ WORK RISK

○ SYSTEM RISK

◉ WORK RISK+ SYSTEM RISK

OUTPUT FILE
:c:¥crisk¥result¥opvar.csv

OUTPUT FILE DESIGNATION          704

SIMULATION EXECUTION          706

RETURN          705

707

CONDITION INPUT SCREEN OF SIMULATION CONDITION INPUT DEVICE

# FIG. 14

```
┌──────────────┐ 801        ┌──────────────────┐ 802
│ SELECT ONE   │───────────>│ SELECT ONE CAUSE │<──────────┐
│ OPERATION    │            │ OF TROUBLE       │           │
└──────────────┘            └──────────────────┘           │
                                     │                      │
                                     ▼  803                 │
                            ┌──────────────────┐            │
                            │ RISK HORIZON=1   │            │
                            └──────────────────┘            │
                                     │                      │
                                     ▼  804                 │
                            ┌──────────────────┐            │
                            │ SELECT PAST CASE │<──────┐    │
                            │ USED AT RANDOM   │       │    │
                            └──────────────────┘       │    │
                                     │  805            │    │
┌──────────────────────────────────────────┐          │    │
│ CALCULATE TROUBLE PROBABILITY             │          │    │
│ FROM THE TOTAL NUMBER OF                  │          │    │
│ HANDLED OPERATIONS AND THE                │          │    │
│ NUMBER OF TROUBLES                        │          │    │
└──────────────────────────────────────────┘          │    │
                                     │  806            │    │
┌──────────────────────────────────────────┐          │    │
│ CALCULATE THE NUMBER OF                   │          │    │
│ TROUBLES FROM THE NUMBER OF               │          │    │
│ HANDLED OPERATIONS AT PRESENT             │          │    │
│ AND THE TROUBLE PROBABILITY               │          │    │
└──────────────────────────────────────────┘          │    │
                        │  9                   809     │    │
              ┌──────────────────┐  ┌──────────────────┐    │
              │ TO LOSS AMOUNT   │  │ RISK HORIZON=    │    │
              │ CALCULATING DEVICE│ │ RISK HORIZON+1   │    │
              └──────────────────┘  └──────────────────┘    │
                        │  807            ▲                 │
              ┌──────────────────┐        │                 │
              │ TOTAL AMOUNT     │        │                 │
              │ OF LOSS          │        │                 │
              └──────────────────┘        │                 │
                        │  808            │                 │
              ╱──────────────────╲  NO    │                 │
             ╱ RISK HORIZON       ╲───────┘                 │
             ╲ REACHED SET        ╱                         │
              ╲ VALUE?           ╱                          │
               ╲────────────────╱                           │
                        │ YES                               │
                        │      8010                         │
              ╱──────────────────╲  NO                      │
             ╱ PROCESS PERFORMED  ╲──────────────────────────┘
             ╲ ON ALL OF CAUSES OF╱
              ╲ TROUBLES?        ╱
               ╲────────────────╱
                        │ YES
                        ▼
                  ┌──────────┐
                  │   END    │
                  └──────────┘
```

PROCESSES OF TROUBLE CONDITION PREDICTING DEVICE

# FIG. 15

```
                                          ___901
              ┌──────────────────────┐
              │  JIKO=1, AMOUNT      │
              │  OF LOSS=0           │
              └──────────────────────┘
                         │
                         ▼                ___902
              ┌──────────────────────┐
              │ GENERATE RANDOM      │
              │ NUMBER ACCORDING TO  │
              │ DISTRIBUTION OF LOSS │
              │ AMOUNT OF CASE DATA  │
              └──────────────────────┘
                         │                ___903
                         ▼
              ┌──────────────────────┐
              │ CALCULATE AMOUNT OF LOSS │◄─────┐
              │ BY USING DISTIBUTION OF  │      │
              │ HANDLED AMOUNTS OF       │      │
              │ CORRESPONDING OPERATION  │      │
              └──────────────────────┘          │
                         │                ___904 │
                         ▼                       │
              ┌──────────────────────┐           │
              │  TOTAL AMOUNT        │           │
              │  OF LOSS             │           │
              └──────────────────────┘           │
                         │                ___905 │
                         ▼                       │
              ┌──────────────────────┐           │
              │  JIKO=JIKO+1         │           │
              └──────────────────────┘           │
                         │                        │
                         ▼                        │
              ╱────────────────────────╲   NO     │
             ╱ JIKO>THE NUMBER          ╲─────────┘
             ╲ OF TROUBLES?             ╱
              ╲────────────────────────╱
                         │ YES
                         ▼
                  ╭──────────────╮
                  │    END       │
                  ╰──────────────╯
```

PROCESSES OF LOSS AMOUNT CALCULATING DEVICE

## FIG. 16

1001
CALCULATE TOTAL
AMOUNT OF LOSS AMOUNT
FOR EACH NUMBER OF
SIMULATION TIMES

↓

1002
CALCULATE MAXIMUM
LOSS AMOUNT

↓

1003
DETERMINE DIVISION
WIDTH ON THE BASIS
OF MAXIMUM VALUE

↓

1004
GENERATE FREQUENCY
DISTRIBUTION ACCORDING
TO DIVISION WIDTH

↓

1005
OUTPUT TO LOSS
AMOUNT FREQUENCY
DISTRIBUTION DATABASE

↓

END

PROCESSES OF LOSS AMOUNT FREQUENCY
DISTRIBUTION GENERATING DEVICE

## FIG. 17

1102
DIVISIONS

| | | DIVISION 1 | DIVISION 2 | ... | DIVISION 30 |
|---|---|---|---|---|---|
| 1101 | FREQUENCY | | | | |

RECORDING ITEM
· FREQUENCY

RECORDING FORMAT OF LOSS AMOUNT
FREQUENCY DISTRIBUTION DATABASE

## FIG. 18

DIVISIONS 1104

| | DIVISION 1 | DIVISION 2 | ... | DIVISION 30 |
|---|---|---|---|---|
| DEPOSITING | | | | |
| FINANCING | | | | |
| · · · | | | | |
| FOREIGN EXCHANGE | | | | |

OPERATIONS 1103

RECORDING ITEM
· FREQUENCY

DATA RECORDING FORMAT OF LOSS AMOUNT
FREQUENCY DISTRIBUTION DATABASE(OPERATION UNIT)

## FIG. 19

CAUSES OF TROUBLES 1106

DIVISION 3
DIVISION 2
DIVISION 30

| | INPUT ERROR | ILLEGAIL ACT | ... | WRONG UNDERST ANDING |
|---|---|---|---|---|
| DEPOSITING | | | | |
| FINANCING | | | | |
| · · · | | | | |
| FOREIGN EXCHANGE | | | | |

OPERATIONS 1105

DIVISION 1107

RECORDING ITEM
· FREQUENCY

DATA RECORDING FORMAT OF LOSS AMOUNT FREQUENCY
DISTRIBUTION DATABASE(OPERATION AND TROUBLE CAUSE)

## FIG. 20

DISPLAY SCREEN OF LOSS AMOUNT FREQUENCY DISTRIBUTION DISPLAY DEVICE

EP 1 308 866 A1

## FIG. 21

**European Patent Office**

**DECLARATION**

which under Rule 45 of the European Patent Convention shall be considered, for the purposes of subsequent proceedings, as the European search report

**Application Number**

EP 02 02 1735

| | CLASSIFICATION OF THE APPLICATION (Int.Cl.7) |
|---|---|
| The Search Division considers that the present application, does not comply with the provisions of the EPC to such an extent that it is not possible to carry out a meaningful search into the state of the art on the basis of all claims<br><br>Reason:<br><br><br>The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br>--- <br>----- | G06F17/60 |

| Place of search | Date | Examiner |
|---|---|---|
| THE HAGUE | 7 January 2003 | Pinheiro, T. |

EPO FORM 1504 (P04C37)